(19) Europäisches Patentamt
European Patent Office
Office européen des brevets

(11) **EP 1 030 330 A1**

(12) **EUROPEAN PATENT APPLICATION**

(43) Date of publication:
**23.08.2000 Bulletin 2000/34**

(51) Int. Cl.⁷: **H01H 3/16**, G01D 11/16,
F25D 27/00

(21) Application number: **00300770.5**

(22) Date of filing: **01.02.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.02.1999 JP 3740899**

(71) Applicant:
**ALPS ELECTRIC CO., LTD.
Ota-ku Tokyo 145 (JP)**

(72) Inventor:
**Tochihara, Katsuhiko,
c/o Alps Electric Co., Ltd.
Ota-ku, Tokyo 145 (JP)**

(74) Representative:
**Kensett, John Hinton
Saunders & Dolleymore,
9 Rickmansworth Road
Watford, Hertfordshire WD1 7HE (GB)**

(54) **Position sensor**

(57)    A slide variable resistor (1) wherein an adjusting joint (11) is fitted into an operating rod (2) by a relatively great frictional force is mounted on a refrigerator body (30). When a closed refrigerator door (31) has pushed the operating rod (2) to its stroke end through the joint (11), it presses the operating rod (2) further, the position into which the joint (11) is fitted is automatically changed. Accordingly, when the refrigerator door (31) has pushed in the operating rod (2) and reached its terminal position, the operating rod reaches its stroke end without fail. This effect can be attained without adjusting the door opening/closing sensor to individual units of a product while mounting it on them. Besides, the stroke of the operating rod is always kept constant.

FIG. 1

**Description**

The present invention relates to a position sensor suitable for detecting the opening and closing of door members.

For the proper operation of a refrigerator, it is necessary to determine whether its door is fully closed or not. For example, in the case of the refrigerator, when its door has been closed, the refrigerator turns off its interior light and turns on its fan motor, and when its door has been opened, the refrigerator turns on its interior light and turns off its fan motor. Accordingly, the refrigerators are generally provided with a position sensor (door opening/closing sensor) for determining whether the refrigerator door has reached a prescribed position near its terminal position (fully closed position) or not. In such a position sensor, when an operating member of the electric element such as a variable resistor and a switch mounted to the refrigerator body is pushed by the door of the refrigerator which has reached immediately before its fully closed position and moved by a prescribed stroke, the electric element outputs a signal indicating that the door is about to reach its fully closed position. In accordance with the signal, the refrigerator turns off its interior light and turns on its fan motor.

In the case that such a refrigerator has a hinged door, the stroke of the operating member changes depending upon how far the electric element is positioned from the turning axis of the door. The stroke also depends on the thickness of a packing for sealing attached to the door. Accordingly, adopted to secure a desired precision of such a position sensor has been a mechanism which enables to adjust the stroke of the operating member or the mounting position of the electric element, taking into account of the mounting position, the thickness of the packing for sealing, etc.

In the case of the above conventional position sensor, a desired precision in detection is secured by adjusting the mounting position of the sensor on each unit of a product because the relative position of the sensor to the object being detected varies slightly from unit to unit. However, it is troublesome to make such adjustment for each unit of a product, constituting a factor of increase in assembly cost of the product. Besides, the products requiring different sensor-mounting positions or different packing thickness require a plurality of types of electric elements, increasing the production costs of the conventional position sensors. Moreover, as the packing attached to a door member loses thickness due to secular change, the stroke end of the operating member of the conventional position sensor moves backward gradually.

In accordance with the present invention, a position adjusting member fitted by a relatively great frictional force is interposed between an object to be detected and an operating member for an electric element. When the operating member has pushed to its stroke end and further pressed by the object to be detected, the position into which the position adjusting member is fitted is automatically changed against the frictional force. Accordingly, the position of the object can easily and precisely be detected, the reference position in detection being the stroke end of the operating member.

In accordance with the present invention, a position sensor is provided which comprises an operating member freely slidable back and forth, a stopper for defining the stroke end of the operating member, an electric element which outputs a signal whose magnitude corresponds to the positional change of an object to be detected accompanied with the movement of the operating member pushed into the object to be detected, and a position adjusting member which is interposed between the operating member and the object to be detected and frictionally fitted by the operating member or the object being detected. When the object to be detected has pushed the operating member to its stroke end and presses it further, the stopper exerts a reaction greater than the frictional force, and the position into which the position adjusting member is fitted is changed automatically.

The above position sensor is so configured that when the operating member has reached its stroke end and is further pressed by the object being detected, the position adjusting member is exposed to an excessive force and changes its position automatically by a necessary distance. Accordingly, when the object to be detected has pushed in the operating member and reached its terminal position, the operating member reaches its stroke end without fail. This effect can be attained without adjusting the position detector to individual units of a product while mounting it on them. Besides, the stroke of the operating member of the position sensor is always kept constant. Therefore, the position sensor is capable of detecting the position of an object easily and precisely, the reference position in detection being the stroke end of the operation member. Thus, it eliminates a troublesome operation such as adjusting the mounting position of the electric element on each unit of a product. Moreover, the position sensor can cope with different mounting positions and different packing thickness.

Further, when the object to be detected is a door member, as the packing attached to the door member loses thickness due to secular change, the position adjusting member changes its position automatically, compensating the lost thickness of the packing and keeping the stroke of the operating member constant. Accordingly, even when the packing becomes considerably thin, the door member will not damage the electric element during opening and closing the door, or the electric element will not prevent the door member from closing fully.

Embodiments of the present invention will now be described, by way of example only, with reference to the accompanying schematic drawings, in which:

Fig. 1 is a partial cross sectional plan view showing a door opening/closing sensor (position sensor) of the electric refrigerator according to one embodiment of the present invention.

Figs. 2A to 2C are explanatory drawings showing an automatic adjusting operation changing the position into which the adjusting joint of the door opening/closing sensor is fitted.

Fig. 3 is an external view of the door opening/closing sensor.

Fig. 4 is an enlarged view showing an engagement of the adjustment joint of the door opening/closing sensor and the operation rod.

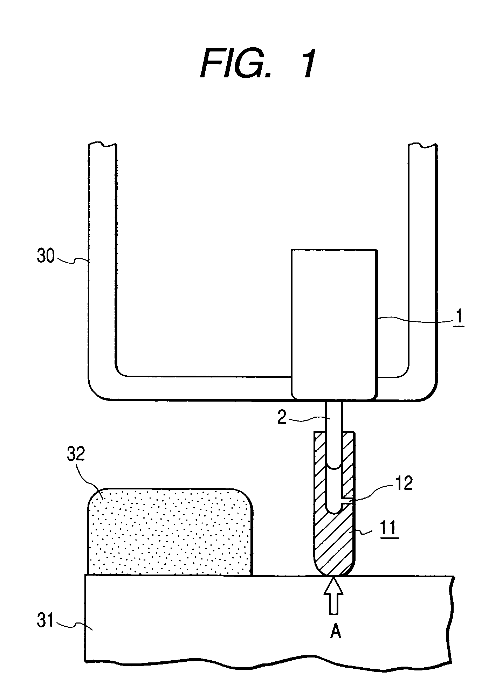

The door opening/closing sensor shown in these figures comprises a slide variable resistor 1 which is mounted on the body 30 of a refrigerator and an adjusting joint 11 which has an air escape 12 and wherein an operating rod 2 of the variable resistor 1 is fitted to support it frictionally. When the door 31 of the refrigerator reaches immediately before its fully closed position and pushed, through the adjusting joint 11, the operating rod 2 in the direction of the arrow A in Fig. 1 by a prescribed distance, the variable resistor 1 outputs a signal of a prescribed magnitude indicating that the door 31 has almost fully been closed. In accordance with the signal, the refrigerator 30 turns off its interior light (not shown), turns on its motor fan (not shown), and operates otherwise.

The slide variable resistor 1 comprises a housing 3, a slider receiver 4 housed in the housing 3 and fixed to one end of the operating rod 2, a brush 5 supported by the slider receiver 4, a resistor 6 which the brush 5 touches elastically, a stopper 7 for checking the movement of the slider receiver 4 and thereby defining the stroke end of the operating rod 2, and a coil spring 8 for returning the operating rod 2 and the slider receiver 4 automatically to their initial positions. When the operating rod 2 is moved back and forth along its axis, the brush 5 slides on the resistor 6, changing the output of the slide variable resistor 1. Through terminals 9 and legs 10 projected to a lower part of the housing 3, the variable resistor 2 is mounted on a printed circuit board (not shown) built in the body 30 of the refrigerator.

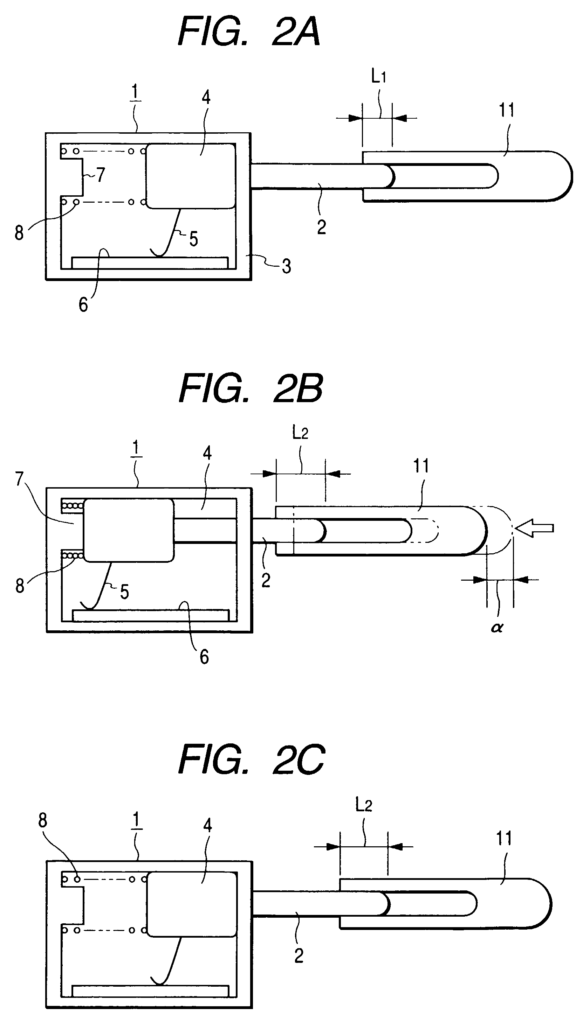

Because the cap-like adjusting joint 11 made of a material such as hard rubber or plastic is frictionally fixed onto the tip of the operating rod 3, a portion of the refrigerator door 31 which is being closed comes into contact with the adjusting joint 11 and pushes backward the adjusting joint 11 and the operating rod 2. When the adjusting joint 11 is further pushed backward after the operating rod 2 has reached its stroke end, the stopper 7 exerts a reaction, which is greater than the frictional force, and the adjusting joint 11 is exposed to an excessive force of the door 31. Under the force, the tip of the operating rod 2 enters the adjusting joint 11 deeper. In other words, the door opening/closing sensor is assembled with the operating rod 2 given a comparatively shallow engagement (L1), as shown in Fig. 2A, before it is mounted on the body 30 of the refrigerator. Then, the slide variable resistor 1 is mounted to a prescribed position on the body 30 of a refrigerator. When the refrigerator door 31 is closed, it pushes the adjusting joint 11 against the friction thereof and continues to press the joint 11 until the axial engagement between the joint 11 and the operating rod 2 is deepened to the depth of L2 (L2>L1) after the operating rod 2 which has been pushed to the stroke end through the adjusting joint 11 becomes immovable as shown in Fig. 2B. Then, when the door 31 is opened again, the elastic force of the coil spring 8 automatically returns the operating rod 2 and the slider receiver 4 to their initial positions, as shown in Fig. 2C. Because the elastic force of the coil spring 8 is considerably smaller than the frictional force between the operating rod 2 and the adjusting join 11, the engaging depth L2 between them is not disturbed. Thus, the protruded position of the tip (which comes in contact with the refrigerator door 31) of the adjusting joint 11 is moved to the stroke end side by the distance $\alpha$ ($\alpha$ =L2-L1 ).

As described above, once the position of the adjusting joint 11 into which the operating rod 2 is fitted is set automatically by closing the door 31, the position will not be disturbed by opening and closing the door 31 repeatedly unless the packing 32 for sealing attached on the door 31 changes in thickness or elasticity. In other words, although the door opening/closing sensor is mounted in a prescribed position on the body 30 of each refrigerator, the engaging depth L2 of the adjusting joint 11 shown in Fig. 2B varies from refrigerator to refrigerator because the relative position of the door opening/closing sensor to the door 31 of the refrigerator varies slightly from unit to unit. Notwithstanding such individual difference, however, the position is automatically adjusted for each refrigerator so that the operating rod 2 comes to its stroke end when the door 31 reaches its terminal position. Therefore, the adjusting joint 11 is always fitted into a proper position. The refrigerator is so configured that when it detects a prescribed signal value, it judges the door 31 close. In the mean time, while the door 31 is being closed, the door 31 first comes into contact with the packing 32 and then presses the packing 32 down to reach its terminal position. Therefore, the output value of the slide variable resistor 1 at the time of the body 30 of the refrigerator coming into contact with the packing 32 is treated as the threshold value, and the refrigerator judges the door 31 close when it detects an output value below the threshold value if the output of the slide variable resistor 1 becomes minimum when the operating rod 2 reaches its stroke end. If the output of the slide variable resistor 1 becomes maximum when the operating rod 2 reaches its stroke end, the refrigerator judges the door 31 close when it detects an output value over the threshold value of the slide variable resistor 1 at the time of the body 30 of the refrigerator coming into contact with the packing 32. On the other hand, in the case in which the thickness of the packing 32 decreases due to secular change, when the door 31 is closed to its terminal position, the adjusting joint 11is further pushed in accordance with the lost thickness of the packing 32 after the operating rod 2 reaching its stroke end. Thus, the fitting position is further deepened, and the stroke end of the operating rod 2 and the terminal position of the refrigerator door 31 are adjusted automatically.

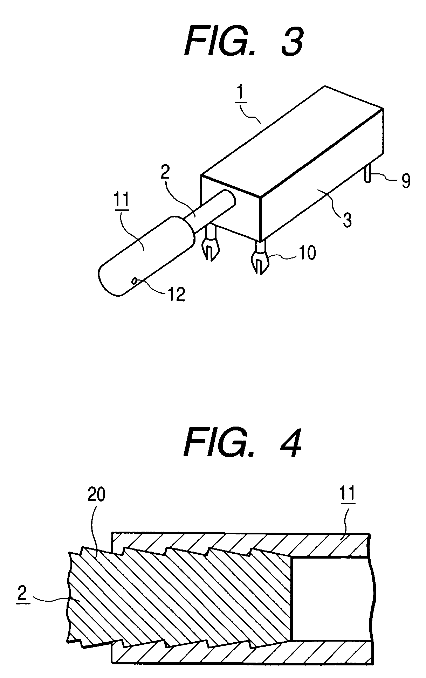

As is shown in Fig. 4, the operating rod 2 of synthetic resin has serrated protrusions 20 on its periphery. The slopes of the protrusions 20 facing the stroke end side of the refrigerator (the left slopes in Fig. 4) are steep, and the slopes of the protrusions 20 of the other side of the refrigerator door are gentle. The operating rod 2 is fitted into the adjusting joint 11, the former's protrusions 20 biting into the latter's inner surface. The so-configured serrated protrusions 20 allow the adjusting joint 11 to slip to the left-hand side in Fig. 4 when it is so forced, but do not allow it to slip in the right hand direction in Fig. 4. Therefore, when the refrigerator door 31 has pushed the operating rod 2 to its stroke end and presses the adjusting joint 11 further, causing the stopper 7 to exert a reaction to the adjusting joint 11, the adjusting joint 11 always slips to the left hand side in Fig. 4 because of the serrated protrusions 20. Other engaging means may be adopted to accomplish similar engagement between the adjusting joint 11 and the operating rod 2. For example, a spiral groove may be formed in the periphery of the operating rod 2, and claw-like protrusions in such a shape may be formed on the inner surface of the adjusting joint 11 as allows the protrusions to move along the groove when the operating rod 2 is turned in one direction but causes them to bite into the groove when the operation rod 2 is turned in the other direction. When the refrigerator door 31 exerts an excessive force to the adjusting joint 11, the adjusting joint 11 moves toward the stroke end side by a necessary distance, rotating in one direction on the operating rod 2.

As is described above, when the operating rod 2 has reached its stroke end and the door 31 exerts an excessive force to the adjusting joint 11, the adjusting joint 11 slips on the operating rod 2 toward the stroke end side by a necessary distance, overcoming the frictional force between them. Therefore, just by mounting this door opening/closing sensor on the body of each refrigerator without making adjustment for individual difference of refrigerators, the operating rod 2 comes to its stroke end without fail when the door 31 reaches its terminal position after pressing the operating rod 2 in. Because the adjusting joint 11 has the air escape 12, it can move smoothly on the operating rod 2. Besides, because the engaging depth between the operating rod 2 and the adjusting joint 11 is automatically adjusted, the stroke of the opening rod 2 under the pressure of the door 31 can be kept constant. Thus, with this door opening/closing sensor, the positional detection of the refrigerator door 31 can be made easily and precisely, the stroke end of the operating rod 2 being the reference position in detection. Moreover, the door opening/closing sensor eliminates troublesome positional adjustment work while mounting it on refrigerators. Further, one type of the door opening/closing sensor can cope with different mounting positions and different thickness of the packing 32.

Also, when the packing 32 attached to the refrigerator door 31 gets thinner due to secular change and so on, the adjusting joint 11, which is pressed further to the refrigerator door 31, can automatically change the position into which the operating rod 2 is fitted. Accordingly, even when the packing 32 abrades, it can be automatically adjusted for the stroke end of the operating rod 2 and the closed position of the refrigerator door 31.

Further, in the embodiment described above, the adjusting joint 11 is fitted into the operating rod 2. However, a similar adjusting joint (a joint formed integrally with the door) may be fitted into the pressed portion of the refrigerator door 31 facing the operating rod 2. In this case, it should be set such that when the operating rod 2 is further pressed to the refrigerator door 31 after reaching the stroke end, an excessive force acts on the joint formed integrally with the door by the reaction of the stopper 7 and causes the joint to displace as much as required to the reverse side of the stroke end against the friction with the pressed portion.

Further, in the embodiment describe above, since a variable resistor capable of appropriately setting a value of resistivity, which is a threshold value, is used as an electrical element for detecting the position, the threshold value can be set within specified limits. However, instead of the variable resistor, a switch which detects positions by the state of on or off can be used.

In the embodiment described above, a door opening/closing sensor detecting the opening/closing state of the refrigerator door 31 is described. However, it is needless to say that the opening and closing of a door member other than that of an electric refrigerator can be detected by a similar sensor. Further, the present invention is applicable even if the object to be detected is not the door member. It can utilized, for example, as a position sensor in an internal-combustion engine for mounting a rotary throttle position sensor on a specified position.

The present invention is implemented in the forms described above, and produces the following effects.

The position sensor comprises an operating member freely slidable back and forth, a stopper for defining the stroke end of the operating member, an electric element which outputs a signal whose magnitude corresponds to the positional change of an object to be detected accompanied with the movement of the operating member pushed into the object to be detected, and a position adjusting member which is interposed between the operating member and the object to be detected and frictionally fitted by the operating member or the object being detected. When the object to be detected has pushed the operating member to its stroke end and presses it further, the stopper exerts a reaction greater than the frictional force, and the position into which the position adjusting member is fitted is changed automatically. Accordingly, when the object to be detected has pushed in the operating member and reached its terminal position, the operating member reaches its stroke end without fail. This effect can be attained without adjusting the position sensor to individual units of a product while mounting it on them. Besides, the stroke of the operating member of the position sensor is always kept constant. Therefore, the position sensor is capable of detecting the position of an object easily and precisely, the reference position in detection being the stroke end of the operation member. Thus, it eliminates a troublesome operation such as adjusting the mounting position of the electric element on each unit of a product, contributing to the decrease in the fabrication cost of the products. Moreover, the position sensor can cope with different mounting positions and different packing thickness. Therefore, the manufacturing cost of such a position sensor can be easily reduced.

Further, when the object to be detected is a door member in the case of this position sensor, as the packing attached to the door member loses thickness due to secular change, the position adjusting member changes its position automatically, compensating the lost thickness of the packing. Accordingly, the position of the object can be automatically adjusted, the reference position being the stroke end of the operating member, and the position of the object can be precisely detected.

**Claims**

1. A position sensor comprising:

an operating member freely slidable back and forth;
a stopper for defining the stroke end of the operating member;
an electric element which outputs a signal whose magnitude corresponds to the positional change of an object to be detected accompanied with the movement of the operating member pushed into the object to be detected; and
a position adjusting member which is interposed between the operating member and the object being detected and frictionally fitted by the operating member or the object to be detected,

wherein when the object to be detected has pushed the operating member to its stroke end and presses it further, the stopper exerts a reaction greater than the frictional force, and the position into which the position adjusting member is fitted is changed automatically.

2. A position sensor according to claim 1, wherein the object to be detected is a door member.

3. A position sensor according to claim 2, wherein the door member is a door of a refrigerator.

4. A position sensor according to claim 1, 2 or 3, wherein the electric element is a slide variable resistor.

5. A position sensor according to any preceding claim, wherein;

the position adjusting member is fitted into the operating member; and
a spring member for returning the operating member automatically is disposed between the position adjusting member and a wall of the electric element.

# FIG. 1

# FIG. 2A

# FIG. 2B

# FIG. 2C

## FIG. 3

## FIG. 4

## EUROPEAN SEARCH REPORT

European Patent
Office

Application Number

EP 00 30 0770

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 996 400 A (RICCI RICHARD J ET AL) 26 February 1991 (1991-02-26) * the whole document * | 1,4,5 | H01H3/16 G01D11/16 F25D27/00 |
| X | US 3 767 877 A (PALMAN L) 23 October 1973 (1973-10-23) * the whole document * | 1-3,5 | |

TECHNICAL FIELDS
SEARCHED (Int.Cl.7)

H01H
G01D
F25D

The present search report has been drawn up for all claims

| Place of search | Date of completion of the search | Examiner |
|---|---|---|
| THE HAGUE | 18 May 2000 | Lloyd, P |

## ANNEX TO THE EUROPEAN SEARCH REPORT
## ON EUROPEAN PATENT APPLICATION NO.

EP 00 30 0770

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2000

| Patent document cited in search report | | Publication date | Patent family member(s) | | Publication date |
|---|---|---|---|---|---|
| US 4996400 | A | 26-02-1991 | AU | 6720690 A | 16-05-1991 |
| | | | WO | 9106111 A | 02-05-1991 |
| US 3767877 | A | 23-10-1973 | DE | 2164652 A | 28-06-1973 |
| | | | GB | 1307675 A | 21-02-1973 |

For more details about this annex : see Official Journal of the European Patent Office, No. 12/82